# EUROPÄISCHE PATENTSCHRIFT

(11) **EP 1 532 868 B1**
(45) Veröffentlichungstag und Bekanntmachung des Hinweises auf die Patenterteilung: **11.03.2009**
(21) Anmeldenummer: 04027533.1
(22) Anmeldetag: 19.11.2004
(51) Int. Cl.: A23L 1/30, A23G 3/00, A23L 1/00

(54) **Pflanzenextrakte enthaltend Schisandra und Wolfsbeeren und Verfahren zu ihrer Herstellung**
Plant extracts containing Schisandra and Wolfberry and method for the preparation thereof
Extrait de plantes contenant du Schisandra et du Lyciet de Barbarie et procédé pour leur préparation

(30) Priorität: 22.11.2003 DE 10354666; 12.12.2003 DE 10358328
(43) Veröffentlichungstag der Anmeldung: 25.05.2005
(73) Patentinhaber: Phytovisions GmbH & Co KG, 82166 Gräfelfing (DE)
(72) Erfinder: Tittel, Gerolf, Dr., 82166 Gräfelfing (DE)
(74) Vertreter: Dosterschill, Peter

(56) Entgegenhaltungen:
- EP-A- 1 375 651
- US-A- 5 891 440
- US-A- 6 093 403
- US-A1- 2003 091 658

## Beschreibung

Die vorliegende Erfindung betrifft eine Zusammensetzung, welche einen Wolfsbeerenextrakt in Kombination mit einem Schisandrabeerenextrakt umfaßt, wobei die Zusammensetzung im Wesentlichen frei ist von Schisandrabeerenkernen und/oder deren Bestandteilen.

Weiterhin betrifft die vorliegende Erfindung Nahrungsmittel und Nahrungsergänzungsmittel, welche die Zusammensetzung enthalten. Insbesondere betrifft sie Getränke, Tees, Teegranulate, Säfte, Brausetabletten, Likörwein, sowie Süßigkeiten, wie etwa Bonbons, eßbares Gummi und Marmelade, weiterhin Kapseln und Tabletten und andere Darreichungsformen zum Einnehmen.

In der heutigen Zeit des Fastfood und der Fertiggerichte wird es immer schwieriger, sich auf natürliche Weise ausgewogen zu ernähren. Daher gibt es einen großen Markt für Nahrungsergänzungsmittel im Allgemeinen, z.B. Vitaminpräparate, und Nahrungsmittel mit Vitamin- und Mineralienzusätzen, z.B. Joghurt und Obstsäfte. Leider werden inzwischen viele Nahrungsmittelzusätze synthetisch hergestellt. Dadurch und auch durch die zusätzliche Zugabe von unphysiologischen Mengen von Vitaminen und Mineralien weisen diese Nahrungsergänzungsmittel weisen nicht mehr ihre natürlichen Mengenverhältnisse der Vitamine und Mineralien auf. Außerdem werden sie oftmals mit synthetischen und in manchen Fällen Allergien auslösenden Stoffen versetzt. Dies führt im Körper oft zu einem kurzfristigen Überangebot und somit zu einem Überschreiten der Maximalaufnahme durch den Organismus. Dies kann bei übermäßigem Verbrauch eines ohne Zusätze unbedenklichen Nahrungsmittels sogar schädlich sein.

Gleichzeitig finden auch natürliche Pflanzenextraktpräparate als Nahrungsergänzungsmittel verstärkt Anklang in der Bevölkerung. Beispiele sind Grüner Tee, Johanniskraut, und viele mehr. Leider handelt es sich hier oft um alkoholische Extrakte. Aufgrund des Alkoholgehalts sind diese Präparate in flüssiger Form nicht für alle Menschen geeignet, insbesondere nicht für Kinder, und die Aufnahme des Pflanzenextrakts durch den Körper kann durch den Alkohol vermindert sein. Außerdem enthalten ethanolische Pflanzenextrakte oftmals physiologisch starkwirkende Stoffe.

Des Weiteren sind viele Heilpflanzen bekannt, die in der traditionellen Medizin und Kräuterkunde bereits seit tausenden von Jahren verwendet werden. Beispielsweise kennt die traditionelle chinesische Medizin (TCM) eine beachtliche Mange an solchen Nahrungs- und Heilpflanzen. In der TCM werden solche Pflanzen und Kräuter als ganze Pflanzen oder Pflanzenteile, wie z.B. Früchte oder Blätter, verwendet, um daraus Tees oder Säfte herzustellen. Vielfach werden die Pflanzen auch ohne weitere Verarbeitung gegessen bzw. eingenommen.

Inzwischen gibt es auch bereits Präparate auf dem Markt, bei denen einfach getrocknete Pflanzen bzw. Früchte, Beeren etc., die in anderen Kulturen als Heilpflanzen bekannt sind, in Kapseln konfektioniert oder als Ingredienzien von Nahrungsmitteln, z.B. Form von Keksen und Riegeln angeboten werden. Der Nachteil bei dieser Art der Konfektionierung ist, dass es bei der Verwendung von ganzen Pflanzen oder Pflanzenteilen nicht möglich ist, mögliche toxische Stoffe, die auch in den Pflanzen enthalten sind, zu entfernen.

So wird beispielsweise im Internet ein in Tablettenform konfektioniertes Produkt unter dem Namen BioLean®Accelerator™ angeboten, welches eine Reihe von Bestandteilen enthält, die in der TCM bekannt sind. Darunter sind Wolfsbeeren, Schisandrabeeren und weitere Pflanzenbestandteile. Eine erfindungsgemäße Zusammensetzung ist jedoch nicht beschrieben.

Das ebenso über das Internet erhältliche Produkt "EveryDay Detox" enthält gleichfalls die traditionell verwendeten Wolfsbeeren und Schisandrabeeren als trockene wässrige Extrakte, sowie ganze, unbehandelte Schisandrabeeren. Auch diese Zusammensetzung unterscheidet sich jedoch von der erfindungsgemäßen Zusammensetzung durch das Vorhandensein von Schisandrabeerenkernen und Bestandteilen davon.

Die Wolfsbeere ist die Frucht einer in China und Asien als Nahrungsmittel und in der TCM als Arzneimittel bekannten Pflanze, nämlich eines zu den Solanaceen gehörenden Strauchs der Gattung Lycium L., zu deutsch Gemeiner Bocksdorn oder auch Teufelszwirn. Die Stamm pflanze ist *Lycium barbarum L.,* (Synonym *Lycium halimifolium*). Weitere Arten sind *Lycium flaccidum, Lycium vulgare* und *Lycium chinense.* Die Pflanze ist in Asien beheimatet, und Wolfsbeeren werden seit langem unter anderem als Nahrungsmittel und in der TCM verwendet, wo sie unter dem Namen Gouji und GouQizi bekannt sind. Die roten Beeren sind ungiftig und haben eine phytochemische Zusammensetzung, die mit denen der Hagebutte oder der Sanddornbeere vergleichbar ist. Allerdings können je nach Pflanzenart die Wolfsbeeren Spuren an Atropin enthalten, die jedoch so niedrig sind, dass der Verzehr keinerlei Gefahr für den Menschen darstellt.

In der TCM werden wässrige Auszüge der getrockneten Wolfsbeeren bei Erschöpfungszuständen und anderen Beschwerden eingenommen, die mit Schwächen des Immunsystems in Zusammenhang stehen. Derartige wässrige Auszüge werden im Stand der Technik oft durch Trocknen der Beeren, Zerkleinern, z.B. Zermahlen, und anschießendes Aufbrühen mit kochendem Wasser zu einer Art Tee hergestellt. Wolfsbeeren wurden in das Chinesische Arzneibuch aufgenommen. Es sind bereits Nahrungsmittelzubereitungen aus ganzen Wolfsbeeren auf dem Markt, wobei üblicherweise 5 bis 10 g als Tagesdosis verabreicht werden. Bis zu 30 g Wolfsbeeren in Form einer Teezubereitung werden in USA verwendet (siehe z.B. www.doctorshealthsupply.com.

Schisandrabeeren sind Früchte der Pflanze *Schisandra chinensis.* Auch diese Früchte werden traditionell in China als Arznei verwendet und sind dort als Wu Weizi bekannt. Verwendet werden die ganzen oder grob zerkleinerten Früchte, die entweder als Aufguß mit Wasser getrunken werden oder als Gewürz verwendet werden.

Magnoliablüten sind die Blüten von Pflanzen der Familie der Magnoliaceae, z.B. *Magnolia Biondii, Magnolia denutata, Magnolia sprengeri*. Diese Pflanzen sind ebenfalls in Asien, insbesondere China heimisch. Die Blüten werden Xin Yi genannt. Xin Yi ist nicht identisch mit Offizinalmagnoliablüten oder Houpohua (*Magnolia officinalis flos*), welche aus Magnolia offizinalis gewonnen werden. Nan-Zhao ist seit 700 Jahren der Hauptherkunftsort von Magnolia in China. Die ganzen Blüten werden entweder ganz oder grob zerkleinert mit Wasser aufgegossen und getrunken.

Es besteht ein Bedarf an Nahrungsergänzungsmitteln, die einerseits möglichst auf natürlichen Pflanzen und/oder deren Auszügen beruhen, und die andererseits unbedenklich sind. Der Erfindung liegt die Aufgabe zugrunde, eine Zusammensetzung und ein Verfahren zu ihrer Herstellung bereitzustellen, wobei die Zusammensetzung als Nahrungsergänzungsmittel geeignet ist und die Nachteile des Standes der Technik zumindest teilweise beseitigt.

Diese Aufgabe wird gelöst durch eine Zusammensetzung, welche einen Wolfsbeerenextrakt in Kombination mit einem Schisandrabeerenextrakt umfaßt, wobei der Schisandrabeerenextrakt aus Schisandrabeeren ohne deren Kerne gebildet ist.

Überraschenderweise wurde im Rahmen der vorliegenden Erfindung gefunden, dass man durch die Kombination von Wolfsbeerenextrakt und einem Extrakt aus entkernten Schisandrabeeren eine Zusammensetzung erhalten kann, welche sich optimal als Nahrungsergänzungsmittel eignet. Schisandrabeeren sind z.B. sehr gut geeignet, den Geschmack der Zusammensetzung zu steuern, da sie sehr aromatisch sind. Wolfsbeeren zeichnen sich zusätzlich durch ihren hohen Nährwert aus.

Vorzugsweise umfaßt die Zusammensetzung noch weitere Pflanzen und/oder deren Teile und/oder deren Extrakte, z.B. Magnolia. Vorzugsweise umfaßt die erfindungsgemäße Zusammensetzung eine Kombination aus Wolfsbeerenextrakt, Schisandrabeerenextrakt und Magnoliablütenextrakt.

Zwar sind einige Wirkungen der Wolfsbeere, der Schisandrabeere und der Magnoliablüte bereits in der TCM bekannt, nicht jedoch der besondere Nährwert und Geschmack von Zusammensetzungen, die eine Kombination des Wolfsbeerenextrakts mit entkerntem Schisandrabeerenextrakt, gegebenenfalls mit Magnoliablütenextrakt umfassen.

Als Wolfsbeeren im Sinne der vorliegenden Erfindung werden vorzugsweise Früchte der *Lycium barbarum L.* verwendet. Die Wolfsbeere ist in China bekannt für die Verbesserung des allgemeinen Wohlbefindens. Sie wirkt gegen Verschleiß und als Anti-Aging-Mittel. Vorteilhaft an der Wolfsbeere ist weiterhin, dass sie keine Toxizität aufweist. Sie ist zudem eine natürliche Quelle für Mineralien und Vitamine, insbesondere Provitamine A, Vitamin C, sowie für Carotinoide, natürliche Pflanzensäuren, insbesondere Zitronensäure, Proteine und Aminsäuren, z.B. Glutaminsäure.

Die in der vorliegenden Erfindung bevorzugte Schisandrabeere ist die Frucht der Pflanze *Schisandra chinensis.* Schisandrabeeren werden in der TCM als getrocknete Früchte unter anderem gegen Streß verwendet. Chemisch und pharmakologisch wurde die Schisandrabeere bereits eingehend charakterisiert (siehe z.B. Hancke J.L., Burgos R.A. und Ahumada F. in Fitoterapiea 70 (1999) Seiten 451-471 "Schisandra chinensis (Turcz.) Baill"). Es ist bekannt, daß Schisandrabeeren Lignane und deren Derivate und Vorläufer enthalten. Darunter sind z.B. Schisandrine und weitere Dibenzocyclookten-Verbindungen, insbesondere Dibenzo a,c cyclookten-Verbindungen. Sie sind aufgrund ihrer Struktur und chemischen Eigenschaften in Wasser nicht gut löslich. Gerade diesen Verbindungen wird pharmakologische Wirksamkeit zugeschrieben, insbesondere als Antioxidantien, Antikarzinogene und antihepatotoxische Substanzen. Allerdings sind diese Stoffe aufgrund ihrer potentiellen Toxizität auch mit Risiken behaftet. Der Großteil der Lignane, Schisandrine und deren Derivate und Vorläufer befinden sich in den Kernen der Schisandrabeere, währen die restlichen Komponenten der Beeren, z.B. das Fruchtfleisch oder die Schale, im wesentlichen frei von ihnen sind oder diese Substanzen zumindest in sehr viel geringerer Konzentration enthalten.

Für die Zwecke der vorliegenden Erfindung werden als Magnoliablüten vorzugsweise diejenigen der Familie der Magnoliaceae, z.B. *Magnolia Biondii, Magnolia denutata, Magnolia sprengeri* verwendet. Magnoliablüten im Sinne der vorliegenden Erfindung sind vorzugsweise die ungeöffneten Knospen der Blüte. Magnoliablüten haben eine Allergien vermindernde Wirkung.

Ein Gegenstand der vorliegenden Erfindung ist eine Zusammensetzung, welche einen Wolfsbeerenextrakt in Kombination mit einem Extrakt der Schisandrabeere umfaßt, wobei die Zusammensetzung im wesentlichen frei ist von Schisandrabeerenkernen und/oder deren Bestandteilen.

Vollkommen überraschend hat sich gezeigt, dass sich ein verbessertes Nahrungsergänzungsmittel aus einer neuartigen Zusammensetzung herstellen lässt, wenn man eine Zusammensetzung aus Pflanzenextrakten der TCM herstellt, wobei Wolfsbeerenextrakt und Schisandrabeerenextrakt verwendet werden, dabei aber darauf geachtet wird, dass der Schisandrabeerenextrakt im wesentlichen frei ist von Kernen der Schisandrabeere bzw. deren Bestandteilen. Es wurde nämlich überraschenderweise gefunden, dass ein solcher Schisandrabeerenextrakt die gleichen positiven Eigenschaften aufweist wie ein Extrakt, der auf herkömmliche Art und Weise gewonnen wurde, jedoch ohne die potentiellen Nachteile der Schisandrine und Lignane. Der erfindungsgemäße Schisandrabeerenextrakt enthält daher weniger Schisandrine und Lignane als ein herkömmlicher Extrakt oder die Beeren als ganzes. Das macht ihn arzneimitteltechnisch vollkommen unbedenklich und ausgezeichnet einsetzbar als Nahrungsergänzungsmittel.

Bei der herkömmlichen Verwendung der Schisandrabeere werden entweder die Beeren als ganzes verwendet, d.h. auch die Kerne mitsamt den darin enthaltenen Schisandrinen und Lignanen. Oder aber die Beeren werden zu Extrakten verarbeitet. Dabei werden die Beeren meist zerkleinert. Dabei werden jedoch unweigerlich die Kerne beschädigt, sodass bei einer nachfolgenden Extraktion unweigerlich große Mengen an Lignanen und Schisandrinen in den Extrakt übergehen. Auch wird im Stand der Technik of ein wässriger Extrakt durch Aufbrühen mit sehr heißem Wasser (nahe Siedepunkt), z.B. zur Zubereitung eines Tees, hergestellt. Auch hierbei bergen die hohen Temperaturen die Gefahr, daß mehr Schisandrine und Lignane aus den Kernen herausgelöst werden und sich später im Extrakt befinden.

Die vorliegende Erfindung stellt nun ein Verfahren bereit zur Herstellung eines schonend gewonnenen wässrigen Schisandrabeerenextrakts, der weiniger Lignane und Schisandrine enthält als herkömmlich gewonnen Extrakte. Auf das Verfahren wird unten noch näher eingegangen.

Die pflanzlichen Inhaltsstoffe stammen vorzugsweise aus der traditionellen chinesischen Medizin.

Die erfindungsgemäße Zusammensetzung stellt unter anderem einen natürlichen Aroma-, Geschmacksstoff- oder Farbstoff dar bzw. kann als solcher verwendet werden. Diese Verwendung der erfindungsgemäßen Zusammensetzung ermöglicht die Aromatisierung und Färbung u.a. von Lebensmitteln, Nahrungsergänzungsmittel, Arzneimitteln und Kosmetika, ohne dass synthetische Aroma-, Geschmacks- oder Farbstoffe zuzusetzen wären.

Eine weitere bevorzugte Ausführungsform der vorliegenden Erfindung ist eine Zusammensetzung, welche zusätzlich einen Extrakt der Magnoliablüte umfaßt.

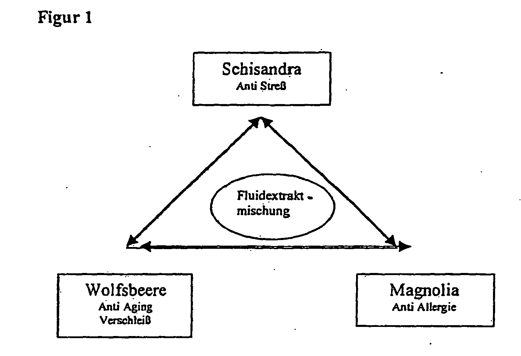

Überraschenderweise hat sich gezeigt, dass die drei Wirkungsskomplexe Anti-Allergie, Anti-Streß und Anti-Verschleiß (Anti-Ageing) in der erfindungsgemäßen Zusammensetzung auf eine neue und überraschend positive Weise zusammenwirken. Die drei Faktoren Streß, Allergien und Verschleiß können sich gegenseitig beeinflussen, denn Streß kann Allergien auslösen und führt zu vorzeitigem Altern. Allergien lösen Streß aus; Streß führt zu vorzeitigem Altern durch Verringerung der Lebensqualität. Körperlicher Verschleiß kann ebenfalls Streß auslösen; Streß führt zu vorzeitigem Altern durch Verringerung der Lebensqualität. Somit kann die erfindungsgemäße Zusammensetzung durch das optimierte Dreiecksverhältnis ihrer Bestandteile als nahrungsergänzendes Mittel zur Verbesserung des Wohlbefindens eingesetzt werden (siehe Figur 1).

Zusätzlich können diese genannten Extrakte mit weiteren Pflanzen bzw. deren Bestandteilen oder Auszügen kombiniert werden, z.B. mit Extrakten der traditionellen chinesischen Medizin (TCM) und/oder der traditionellen europäischen Kräuterkunde und/oder Vitamine und/oder Mineralien. Außerdem kann eine Kombination mit Ginsengwurzeln oder anderen Teilen der Ginsengpflanze bereitgestellt werden.

Des weiteren ist das Vorliegen der natürlichen Pflanzenbestandteile in Form von Extrakten vorteilhaft, da auf diese Weise die Mengenverhältnisse optimal gewählt werden können und bei Bedarf gewisse Bestandteile der einzelnen Pflanzenteile abgetrennt werden können. Vorzugsweise enthält die erfindungsgemäße Zusammensetzung keine pharmakologisch aktiven Stoffe. Dies ist ein weiterer Vorteil der vorliegenden Erfindung, da durch das Abreichern solcher Stoffe das toxikologische Gefährdungspotential verringert werden kann.

Die erfindungsgemäße Zusammensetzung ist vorzugsweise ein Fluidextraktgemisch aus den wäßrigen Extrakten der zwei bzw. drei Bestandteile. Ein Fluidextraktgemisch im Sinne der vorliegenden Erfindung ist ein Gemisch aus zwei oder mehr wäßrigen Extrakten der vorliegenden Erfindung.

Umfaßt die erfindungsgemäße Zusammensetzung ein Fluidextraktgemisch aus Wolfsbeeren und Schisandrabeerenextrakt, so sind Mengenverhältnisse vorzugsweise wie folgt: von 20 bis 90 Gew.-% (bezogen auf das Gesamtgewicht des Extrakts) Wolfsbeerenextrakt, und von 20 bis 90 Gew.-% (bezogen auf das Gesamtgewicht des Extrakts), bevorzugt 5 bis 50 Gew.-% (bezogen auf das Gesamtgewicht des Extrakts) Schisandrabeerenextrakt.

Sind drei Extrakte in der erfindungsgemäßen Zusammensetzung vorhanden, so umfaßt die Zusammensetzung vorzugsweise von etwa 20 bis etwa 90 %, stärker bevorzugt mindestens etwa 25 %, stärker bevorzugt mindestens etwa 30 %, noch stärker bevorzugt mindestens etwa 50 %, bis vorzugsweise etwa 80 %, stärker bevorzugt bis etwa 70 % Wolfsbeerenextrakt; und von etwa 5 bis etwa 50 %, bevorzugt von etwa 10 bis etwa 30 % Schisandrabeerenextrakt; und von etwa 0,01 bis etwa 15 %, stärker bevorzugt von etwa 0,1 bis etwa 10, stärker bevorzugt von etwa 1 bis etwa 5 % Magnoliablütenextrakt und/oder Ginsengextrakt.

Bei Flüssigkeiten beziehen sich die Prozentangaben auf Volumenprozent, bei Konzentraten und festen Stoffen beziehen sie sich auf Gewichtsprozent. Bezogen sind die Angaben jeweils auf das Gesamtgewicht des Extrakts bzw. der Zusammensetzung oder Extraktgemisches.

Vorzugsweise liegt die erfindungsgemäße Zusammensetzung in Form eines Konzentrats vor. Das Konzentrat kann entweder aus dem Fluidextraktgemisch der Bestandteile hergestellt werden, oder es können die wäßrigen Extrakte der einzelnen Bestandteile separat konzentriert werden.

Das erfindungsgemäße Konzentrat wird vorzugsweise dadurch erhalten, dass die einzelnen Extrakte oder das Fluidextraktgemisch unter Vakuum eingedampft werden. Besonders bevorzugt ist ein Konzentrat, das von etwa 60 bis etwa 80 Gew.-%, vorzugsweise mindestens etwa 65 Gew.-%, stärker bevorzugt mindestens etwa 70 Gew.-%, stärker bevorzugt mindestens etwa 75 Gew.-% und vorzugsweise bis etwa 80 Gew.-%, stärker bevorzugt bis etwa 75 Gew.-% Wolfsbeerenextrakt; von etwa 15 bis etwa 25 Gew.-%, vorzugsweise mindestens etwa 20 Gew.-%, Schisandrabeerenextrakt: und gegebenenfalls von etwa 5 bis etwa 15 Gew.-%, vorzugsweise mindestens etwa 10 Gew.-% Magnoliablütenextrakt umfaßt.

Eine weitere erfindungsgemäße Modifikation der Zusammensetzung besteht darin, ein Gemisch aus getrockneten Extrakten zu verwenden. Besonders bevorzugt ist ein Gemisch, das von etwa 60 bis etwa 80 Gew.-%, vorzugsweise mindestens etwa 65 Gew.-%, stärker bevorzugt mindestens etwa 70 Gew.-%, stärker bevorzugt mindestens etwa 75 Gew.-% und vorzugsweise bis etwa 80 Gew.-%, stärker bevorzugt bis etwa 75 Gew.-% getrockneten Wolfsbeerenextrakt; von etwa 15 bis etwa 25 Gew.-%, vorzugsweise mindestens etwa 20 Gew.-%, getrockneten Schisandrabeerenextrakt; und gegebenenfalls von etwa 5 bis etwa 15 Gew.-%, vorzugsweise mindestens etwa 10 Gew.-% getrockneten Magnoliablütenextrakt und/oder Ginsengextrakt umfaßt. Alle Gewichtsprozentangaben sind jeweils bezogen auf das Gesamtgewicht der Zusammensetzung.

Besonders bevorzugt ist eine Zusammensetzung, die pro 100g nativ 69,6g getrockneten Wolfsbeerenextrakt, 21,7g getrockneten Schisandrabeerenextrakt und 8,7g getrockneten Magnoliablütenextrakt umfaßt.

Die erfindungsgemäßen Zusammensetzungen können als Nahrungsergänzungsmittel Anwendung finden. Bei der Verwendung als Nahrungsergänzungsmittel enthalten die Zusammensetzungen vorzugsweise abgereichte Mengen an bzw. im wesentlichen keine pharmakologisch aktiven Stoffe. Dies kann z.B. erreicht werden, indem diese Stoffe zielgerichtet abgereichert werden. Bei der Magnoliablüte ist es zum Beispiel möglich, die ätherischen Öle zu entfernen.

Ein weiterer Gegenstand der vorliegenden Erfindung betrifft Nahrungsergänzungsmittel, welche die erfindungsgemäße Zusammensetzung umfassen. Die erfindungsgemäßen Zusammensetzungen haben von sich aus einen angenehmen fruchtigsäuerlichen Geschmack und können daher den meisten Nahrungsmitteln zugegeben werden. Es ist z.B. möglich, Fruchtsäfte mit der erfindungsgemäßen Zusammensetzung als Zusatz herzustellen.

Es sind im Rahmen der Erfindung auch Nahrungsergänzungsmittel vorgesehen. Diese enthalten neben der erfindungsgemäßen Zusammensetzung weiterhin nahrungsmittelverträgliche Hilfsstoffe, Zusatzstoffe, Trägerstoffe, Geschmacksstoffe, und/oder Verdickungsmittel. Beispiele sind, je nach dem herzustellenden Nahrungsmittel Zucker, Gewürze, Gelatine usw.

Erfindungsgemäße Nahrungsergänzungsmittel sind solche auf Trockenbasis oder Granulatbasis, die vorzugsweise auf dem getrockneten Extrakt bzw. dem getrockneten Fluidgemisch basieren, wie z.B. Tees, Instanttees, Kapseln etc. Erfindungsgemäßer Magnoliablütentee kann zu 3 bis 9 g Magnolia-Trockenextrakt pro Portion getrunken werden.

Weitere erfindungsgemäße Nahrungsergänzungsmittel sind solche, die auf dem Fluidextraktgemisch basieren, wie etwa Marmelade, Süßigkeiten, wie z.B. Bonbons, Gummibonbons, Gummibärchen, Lutscher etc. Noch weitere erfindungsgemäße Nahrungsergänzungsmittel sind z.B. Brausetabletten und ähnliches. Brausetabletten enthalten vorzugsweise 300 mg des Extraktgemisches, wobei die Brausetabletten mehrmals täglich eingenommen werden können.

Auch Liköre und andere alkoholische Getränke können mit den erfindungsgemäßen Zusammensetzungen hergestellt werden.

Auch zu Milchprodukten können die erfindungsgemäßen Zusammensetzungen hinzugegeben werden, z.B. zu Joghurt, Milch, Molke etc.

Auch in Getreideriegeln und ähnlichen Getreideprodukten (Brot, Müsli) können die erfindungsgemäßen Zusammensetzungen hinzugegeben werden.

Ein weiterer Gegenstand der vorliegenden Erfindung ist ein Verfahren zur Herstellung einer erfindungsgemäßen Zusammensetzung. Das Verfahren umfaßt die Schritte:
(i) Bereitstellen von Wolfsbeeren und Schisandrabeeren, und gegebenenfalls Magnoliablüten und/oder weiterer Komponenten,
(ii) Herstellen von separaten Extrakten, wobei der Schisandrabeerenextrakt im Wesentlichen frei ist von Schisandrabeerenkernen und/oder deren Bestandteilen,
(iii) Mischen der Extrakte, gegebenenfalls
(iv) Trocknung, insbesondere unter aromaschonenden und Maillard-Reaktionen vermeidenden Bedingungen.

Vorzugsweise werden die Extrakte im folgenden Verhältnis gemischt:
etwa 5 - 50 Teile Schisandrabeerenextrakt,
etwa 20 - 90 Teile Wolfsbeerenextrakt, und gegebenenfalls
etwa 0,01 - 20 Teile Magnoliablütenextrakt, wobei dieser durch einen anderen Pflanzenextrakt, insbesondere der traditionellen Medizin ersetzt oder ergänzt werden kann.

Ein weiterer Gegenstand der vorliegenden Erfindung ist ein Verfahren zur Herstellung eines Beerenextrakts, umfassend:
(a) Bereitstellen von nicht zerkleinerten Beeren,
(b) Quellenlassen der Schisandrabeeren in Wasser
(c) Extrahieren der Beeren in Wasser,
(d) Abziehen der Flüssigkeit, bis ein Extrakt mit einem Wassergehalt von unter 50 Gew.-% (bezogen auf das Gesamtgewicht des Extrakts) erhalten wird.

Das Ausgangsmaterial besteht vorzugsweise in den getrockneten Beeren. Allerdings können auch andere Pflanzenbestandteile verwendet werden, wie z.B. Blüten, Knospen, Blätter u. dgl.

Insbesondere bei Verwendung von Schisandrabeeren ist darauf zu achten, daß die Beeren nicht zerkleinert oder gequetscht oder auf andere Art und Weise mechanisch verändert werden, damit vermieden wird, daß die darin befindlichen Kerne beschädigt werden.

Anschließend werden in Schritt (b) die Beeren in Wasser quellengelassen. Hierbei ist eine Temperatur von unterhalb von 90 °C zu wählen, bevorzugt unterhalb von 85 °C, stärker bevorzugt von unterhalb 80 °C, noch stärker bevorzug von unterhalb 75 °C, noch stärker bevorzug von unterhalb 70 °C, noch stärker bevorzug von unterhalb 65 °C. Am geeignetsten ist eine Temperatur im Bereich von 40 bis 65 °C, stärker bevorzugt im Bereich von 45°C bis 60 °C, stärker bevorzugt im Bereich von 50 bis 60 °C.

Die Quellzeit kann je nach dem Zustand, Grad der Trockenheit etc. der trockenen Beeren, die als Ausgangsmaterial verwendet werden, variieren. Vorteilhafterweise lässt man die Beeren für eine Anzahl von Stunden quellen, z.B. zwischen 4 und 24 Stunden, vorzugsweise um die 12 Stunden. Die Quellzeit ist jedoch nicht kritisch.

Die gequollenen Beeren werden dann in Schritt (c) einer Extraktion unterzogen. Hierzu wird eine größere Menge Wasser hinzugegeben. Die Volumenmenge ist nicht kritisch, liegt aber vorzugsweise im Bereich des 5 bis 10-fachen des Volumens der Beeren aus Schritt (b).

Die Extraktionstemperatur sollte nicht höher sein als 70 °C. Ein bevorzugter Temperaturbereich ist von etwa 50 °C bis etwa 70 °C. stärker bevorzugt von etwa 55 °C bis etwa 65 °C, stärker bevorzugt von etwa 60 °C bis etwa 65 °C.

Wichtig ist jedenfalls, dass kein kochendes oder annähernd kochendes Wasser verwendet wird.

Die Extraktionszeit beträgt vorteilhafterweise zwischen 1 bis 4 Stunden, vorzugsweise zwischen 2 bis 4 Stunden, stärker bevorzugt etwa 3 Stunden.

Anschließend wird in Schritt (d) die Flüssigkeitsmenge reduziert, bis ein Extrakt mit einem Wassergehalt von unter 50 Gew.-% (bezogen auf das Gesamtgewicht des Extrakts) erhalten wird. Es kann auch ein stärker konzentrierter Extrakt erhalten werden, z.B. bis auf ca. 30 - 40 Gew.-% Wasser, wobei das erhaltene Konzentrat aus Ausgangsmaterial für z.B. Marmelade, Bonbons, Saft, Likör u. ähnliches dienen kann.

Das Abziehen der Flüssigkeit kann auf verschiedene Art und Weise geschehen, bevorzugt ist z.B. ein Eindicken unter Vakuum. Es sind aber auch andere Verdampfungstechniken möglich. Bei der Eindampfung wird nochmals die Menge an ätherischen Ölen, die sich im wässrigen Extrakt befunden haben können, verringert. Auch wird die Menge an Lignanen und Schisandrinen nochmals verringert.

Es ist auch möglich, einen Trockenextrakt herzustellen, der im Wesentlichen kein Wasser mehr enthält. Dieser eignet sich zur Durchführung chemischer Analysen und kann auch weiterverarbeitet werden.

Der erfindungsgemäße wässrige Extrakt enthält vorzugsweise im Wesentlichen keine pharmakologisch stark wirksamen Stoffe. Vorzugsweise sind in dem Schisandrabeerenextrakt die Lignane und/oder Schisandrine abgereichert. Beispielsweise sind in der erfindungsgemäßen Zusammensetzung Alkaloide wie Atropin in maximaler Konzentration von 100 ppb (parts per billion, 0,1 mg/kg) und Ligane, wie Schisandrine und dessen Derivate, in maximaler Konzentration von 0,1 %, bezogen auf den Trockenanteil des Extrakts, und vorzugsweise darunter enthalten.

Der Magnoliablütenextrakt ist vorzugsweise ein entölter Extrakt. Vorzugsweise sind im Magnoliablütenextrakt die ätherische Öle und/oder Lignane und/oder Alkaloide in einen Bereich unter 0,1% abgereichert. Besonders bevorzugt verwendet man von der Magnolienblüte nur die unreifen, ungeöffneten Blütenstände. Vorzugsweise wird aus den Magnolieblüten zuvor das Öl zumindest weitgehend entfernt, bevor der Extrakt der vorliegenden Erfindung hergestellt wird. Das Öl kann durch Abpressen oder auch durch die Steuerung der Extraktion weitgehend entfernt oder auf Spuren reduziert werden.

Insbesondere zur Herstellung eines Extrakts der Wolfsbeere kann zusätzlich zu den oben genannten Schritten (a) bis (d) noch eine weitere Extraktion mit Ethanol erfolgen.

Das Verfahren umfaßt daher vorzugsweise noch den Schritt (e) Zugeben von Ethanol zu dem Extrakt aus Schritt (d) und Extrahieren bei einem Ethanolgehalt von 70 - 90 Vol.-%, bezogen auf das Gesamtvolumen des Extrakts.

Bei ca. 70- 80 °C und einem Alkoholgehalt von etwa 80 % werden die Carotinoide aus den Beeren extrahiert. In diesem Extrakt liegen somit kaum noch wasserlösliche Komponenten vor da diese ja schon in der 1. Extraktion herausgeholt wurden. In diesem Extrakt liegen nun die lipophilen Inhaltsstoffe. Hier ist vor allem das sehr spezielle Inhaltsstoffspektrum der Carotinoide zu nennen sowie weitere Inhaltsstoffe wie Vitamin E.

Ein weiterer erfindungsgemäßer Gegenstand ist somit ein Schisandrabeerenextrakt, der nach einem erfindungsgemäßen Verfahren erhältlich ist. Ein solcher Extrakt ist neuartig und enthält verringerte Konzentrationen an Schisandrinen und Lignanen, vorzugsweise unterhalb von 0,1 %, bezogen auf den in Schritt (d) erhaltenen Extrakt. Stärker bevorzugt beträgt die Schisandrin- bzw. Lignankonzentration unter 0,75 %, stärker bevorzugt unter 0,05 %.

Noch ein weiterer erfindungsgemäßer Gegenstand ist somit ein Wolfsbeerenextrakt, der nach einem erfindungsgemäßen Verfahren erhältlich ist.

Noch ein weiterer erfindungsgemäßer Gegenstand ist somit ein Magnolienblütenextrakt, der nach einem erfindungsgemäßen Verfahren erhältlich ist.

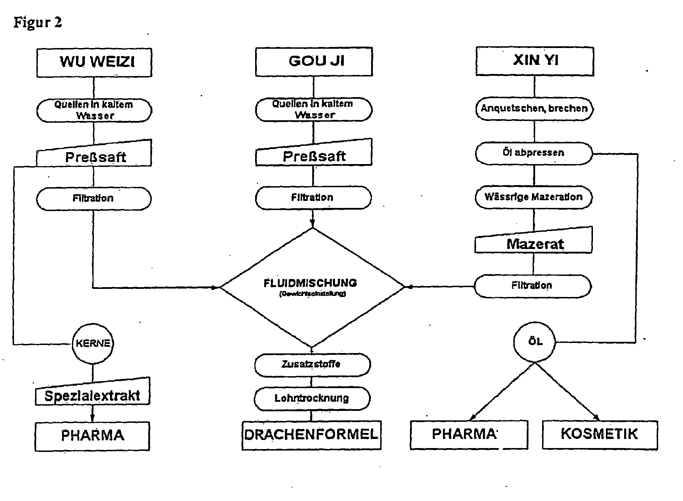

Ein bevorzugtes erfindungsgemäßes Verfahren ist in Figur 2 dargestellt.

Vorzugsweise verwendet man von der Magnoliablüte nur die unreifen bzw. ungeöffneten Blütenstände. Die Magnolienblüten werden vorzugsweise angequetscht, und das Öl wird abgepreßt. Dann wird eine wäßrige Mazeration hergestellt, aus der ein Mazerat gewonnen wird. Das Mazerat wird gefiltert und in das Fluidgemisch eingebracht.

Nach dem erfindungsgemäßen Verfahren wird eine dunkelbraune, aromatisch riechende Flüssigkeit erhalten. Diese kann dann entweder als Fluidgemisch, oder auch als separate Extrakte, gegebenenfalls unter Zusatz von nahrungsmittelunbedenklichen Zusatzstoffen, getrocknet und optional zu einem Pulvergranulat verarbeitet werden. Der Trockenextakt eignet sich zur Herstellung von Tabletten, Kapseln, Tees etc.

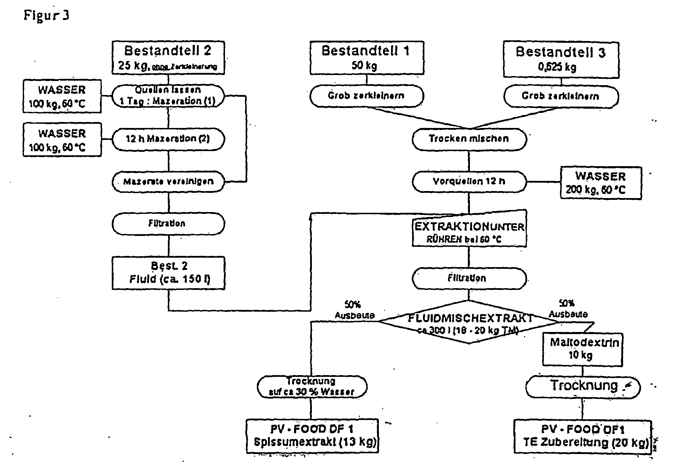

Ein weiteres erfindungsgemäßes kontinuierliches Herstellungsverfahren ist in Figur 3 dargestellt (siehe auch Beispiel 1):

Noch ein weiterer Gegenstand der vorliegenden Erfindung ist eine kosmetische Zusammensetzung, die eine erfindungsgemäße Zusammensetzung umfaßt. Vorzugsweise umfaßt die kosmetische Zusammensetzung zusätzlich pharmazeutisch verträgliche Hilfs-, Zusatz- und/oder Trägerstoffe. Die kosmetische Zusammensetzung kann in Form von Cremes, Lotionen, Gel, Seife u. dgl. vorliegen.

Die Erfindung wird nun anhand der Figuren und Beispiele näher erläutert.

### Figuren

Figur 1 zeigt ein Dreieckswirkverhältnis einer Ausführungsform der erfindungsgemäßen Zusammensetzung, die im dargestellten Beispiel aus drei Bestandteilen besteht,
Figur 2 zeigt ein Flußdiagramm des erfindungsgemäßen Herstellungsverfahrens mit den Bestandteilen Wu Weizi (chin. für Schisandrabeeren), Gou Ji (chin. für Wolfsbeeren) und Xin Yi (chin. für Magnoliablüten), und
Figur 3 zeigt ein Flußdiagramm eines kontinuierlichen erfindungsgemäßen Herstellungsverfahrens, wobei Bestandteil 1 durch Wolfsbeeren; Bestandteil 2 durch Schisandrabeeren und Bestandteil 3 durch Magnoliablüten gebildet ist.

### Beispiele

### Beispiel 1

### Herstellung der Extrakte

### 1. Herstellung eines wässrigen Extrakts

Diese Verfahrensschritte sind auf Wolfsbeeren und Schisandrabeeren anwendbar.

Die Beeren werden als getrocknete Beeren verwendet. Die Beeren werden in der Qualität nach Arzneimittelstandard untersucht Die Schisandrabeeren werden zur Extraktion nicht zerkleinert. Die Beeren werden in Wasser gequollen bei 50-60 °C. Anschließend werden die Beeren bei 60-65 °C für 3 Stunden extrahiert. (Dies geschieht durch dauerhafte Rundspülung des zugesetzten Wassers.) Es wird hierzu etwa die 5-10 fache Menge des Gewichts der Beeren verwendet. Anschließend wird die Flüssigkeit abgezogen. Hierbei werden die Beeren nicht gepresst. Die Flüssigkeit wird filtriert und anschließend im Vakuum schonend bei 40 °C eingedickt.

Ergebnis ist ein Extrakt mit ca. 30-40 % Wasser der zähflüssig ist. Bei der Eindampfung verschwinden die ätherischen Öle, die zum Teil mitextrahiert wurden.

Das erfindungsgemäße Verfahren wurde bereits Large Scale durchgeführt;
100 kg Beeren (getrocknet) wurden nach dem erfindungsgemäßen Verfahren verarbeitet (Zugabe von 1000 Liter Wasser) und ergaben 50 kg Extrakt, der weiter auf 35 kg Extrakt eingedickt wurde. Dieser Nativextrakt war noch viskos und eignete sich hervorragend zur Herstellung von Nahrungsmittelprodukten.

### Beispiel 2

### Herstellung einer Zusammensetzung bestehend aus einer Kombination aus Extrakten der Wolfsbeere, Schisandrabeere und Magnoliablüte

### Stufe I:

### Vorbereitung der Ausgangsmaterialien:

Die Ausgangsmaterialien werden auf ihre Reinheit und Qualität geprüft. Dabei wird auf fremde Bestandteile geachtet und die Verunreinigung mit Umweltschadstoffen bestimmt. Darunter fallen die Bestimmung von Pestiziden, Schwermetallen, Aflatoxinen sowie die mikrobiologische Qualität.

Als nächstes werden die Magnolienblütenknospen sowie die Wolfsbeeren grob zerkleinert. Im Labor erfolgt dies mit einer handelsüblichen Küchenmaschine (Mulinette). Die Schisandrabeeren werden nicht zerkleinert.

### Stufe II:

### Quellen und Extraktion:

Die nicht zerkleinerten Schisandrabeeren (500g) werden bei 60 °C mit 2 Liter Wasser versetzt und 12 Stunden quellen gelassen. Anschließend wird das Wasser abdekantiert und erneut 2 Liter Wasser auf die nun gequollenen Beeren gegeben. Nach erneutem Quellen über 12 Stunden werden die erste und die zweite Wasserphase vereinigt und filtriert.

Die grob zerkleinerten Wolfsbeeren (1 kg) werden mit den Zerkleinerten Magnoliablütenknospen (12,5 g) gemischt. Anschließend werden 2 Liter Wasser zugegeben und 12 Stunden quellen lassen unter Rühren bei 60 °C.

Die wäßrigen Auszüge aus Schisandra werden nun zu der Mischung Wolfsbeeren/Magnolia gegeben und unter kräftigem Rühren erneut für 12 Stunden extrahiert.

Anschließend wird filtriert, wobei zuerst eine grobe Filtration nötig ist, um Kerne und Fruchthaut zu entfernen. Anschließend ist eine Filtration durchgeführt um feine Schwebstoffe abzutrennen. Dabei ist es vorteilhaft, die Lösung vorher zu zentrifugieren, um so den Filtrationsschritt zu erleichtern.

### Stufe III:

### Weiterverarbeitung zu Zwischenprodukten:

Das erhaltene Fluidgemisch wird möglichst sofort weiterverarbeitet zu den folgenden Produkten:
1. Dicke-Konzentrat
2. Trockenextraktzubereitung

### Zu 1.

Die Herstellung des Dickeextraktes erfolgt durch Abziehen des größten Teils des Wassers aus dem Fluid mittels Vakuum und Hitze oder durch Gefriertrocknung.

### Zu 2.

Für die Herstellung einer Trockenextraktzubereitung wird die Fluidmischung auf einen Trockenanteil von ca. 40-60 % eingeengt und anschließend der Mischung einer Zusatzstoff für die Herstellung der Trockenextraktzubereitung zugegeben (zum Beispiel Malodextrin). Anschließend wird die Mischung getrocknet, bis ein fester Trockenextrakt entsteht.

Aus den erhaltenen Zwischenprodukten werden anschließend die Fertigprodukte wie Brausetabletten, Bonbons, Gummibärchen, Saft, Likörwein, Kapseln, Tabletten hergestellt. Die Herstellung entspricht den gängigen Methoden zu Herstellung solcher Produkte im Bereich Nahrungsergänzungsmitteln, Lebensmittel und pharmazeutischer Produkte.

### Beispiel 3

### Herstellung eines Wolfsbeerenextrakts

Nach der wässrigen Extraktion der Wolfsbeeren wird wie oben beschrieben die Flüssigkeit abgezogen. Anschließend gibt man reinen Alkohol darauf und lässt die Mischung kurz extrahieren. Anschließend zieht man ab und gibt auf die feuchten Beeren nochmals Alkohol.

### Beispiel 4

### Ergebnis der Extraktionen:

### A: Wolfsbeeren:

*Inhaltsstoffe:* freie Zucker, Polysacharide, Aminosäuren, Vitamin C, eventuell B Vitamine, Mineralstoffe wie Ca, Mg, Fe, Mn, Zn
*Abgereicherte Inhaltstoffe:* keine lipophilen Komponenten wie Vitamin E und Carotinoide

### B: Schisandrabeeren:

*Inhaltsstoffe:* Vitamin C, Fruchtsäuren, Mineralstoffe wie Ca, Mg, Fe, Mn, Zn,
*Abgereicherte Inhaltstoffe:* Lignane weniger als 0,1 % in Spezialextrakt Schisandra und weniger als 0,05 % im gesamten Mischextrakt

### C: Spezialauszug Wolfsbeeren ethanolisch:

*Inhaltsstoffe:* Carotinoide (Verteilungsspektrum naturanalog) Vitamin E,

### Beispiel 5

### Herstellung von Nahrungsmittelprodukten aus den erfindungsgemäßen Extrakten

Die einzelnen Extrakte werden in dem gewünschten Verhältnis gemischt, um zum Aroma und Inhaltsstoffverhältnis zu kommen. Hier kann auch je nach Vorgabe der Spezialauszug der Carotinoide aus den Wolfsbeeren zugemischt werden. Anschließend können noch Hilfsstoffe wie Maltodextrin zugegeben werden (ca.: 20-30 %) und dann gut vermischt. Anschließend wird der Extrakt bzw. das Extraktgemisch in einem Vakuumbandtrockner zum Trockenextrakt getrocknet.

### Weichgelatine-Kapseln

| | |
|---|---|
| Füllmenge | 600 mg |
| Zusammensetzung | 300 mg Konzentrat des erfindungsgemäßen Fluidgemisches + 300 mg Lauroglykol |
| Dosierung | 3 tägl. 1 bis 2 |
| Packmittel | Blister + Dose |

### Hartgelatine-Kapseln

| | |
|---|---|
| Füllmenge | 500 bis 600 mg |
| Zusammensetzung | 300 mg Konzentrat des erfindungsgemäßen Fluidgemisches + kleine Menge an Fließmittel |
| Dosierung | 3 tägl. 1 bis 2 |
| Packmittel | Blister + Dose |

### Brausetabletten

| | |
|---|---|
| Gewicht: | 2 g |
| Zusammensetzung: | 1,2 g Trockenextrakt-Zubereitung + Füllstoffe |
| Dosierung: | 3 tägl. 1 bis 2 |
| Packmittel: | Röhrchen mit Trocknungsmittel im Stopfen |

### Instanttee

| | |
|---|---|
| Gewicht | 1 Beutel enthält 10 g |
| Zusammensetzung | 1,2 g Trockenextrakt-Zubereitung + 8,8 g Füllstoffe |
| Dosierung | 3 x 1 tägl. |
| Packmittel | Aluminiumbeutel verschweißt |

### Kräutertee

| | |
|---|---|
| Gewicht | 1 Teebeutel enthält 5 g Drogenmischung |
| Zusammensetzung in 100 g | |
| Gou Ji Früchte, getrocknet | 80 Teile |
| Wou Weizi | 20 Teile |
| Xin Yi | 0,05 Teile |
| Dosierung | 3 x 1. tägl. eine bis zwei Tassen |
| Der Teebeutel wird mit heißem Wasser aufgegossen und 2 bis 3 min. stehen gelassen. | |
| Packmittel | Papierpäckchen |

## Patentansprüche

1. Verfahren zur Herstellung eines Schisandrabeerenextraktes, umfassend die Schritte:
(a) Bereitstellen von nicht zerkleinerten Schisandrabeeren,
(b) Quellenlassen der Schisandrabeeren in Wasser bei einer Temperatur von unterhalb von 90°C,
(c) Extrahieren der Schisandrabeeren in Wasser bei einer Temperatur nicht höher als 70°C;
(d) Abziehen der Flüssigkeit bis ein Extrakt mit einem Wassergehalt von unter 50 Gew.-% (bezogen auf das Gesamtgewicht des Extrakts) erhalten wird.

2. Verfahren nach Anspruch 1, wobei in Schritt (b) das Quellenlassen bei einer Temperatur von 40°C bis 65°C durchgeführt wird.

3. Verfahren nach Anspruch 1 oder 2, wobei in Schritt (c) das Extrahieren bei einer Temperatur von 50°C bis 70°C durchgeführt wird.

4. Verfahren nach einem der vorhergehenden Ansprüche, weiterhin umfassend den Schritt:
e) Zugeben von Ethanol zu dem Extrakt aus Schritt d) und Extrahieren bei einm Ethanolgehalt von 70 - 90 Vol-%, bezogen auf das Gesamtvolumen des Extrakts.

5. Schisandrabeerenextrakt, erhältlich durch ein Verfahren nach einem der Ansprüche 1 bis 4.

6. Schisandrabeerenextrakt nach Anspruch 5, **dadurch gekennzeichnet, dass** er Lignane und/oder Schisandrine in einer Konzentration von unterhalb 0,1 % (bezogen auf den Trockenanteil des Extrakts) enthält.

7. Zusammensetzung, umfassend einen Schisandrabeerenextrakt, erhältlich durch ein Verfahren nach einem der Ansprüche 1 bis 4, in Kombination mit einem Wolfsbeerenextrakt, wobei die Zusammensetzung im Wesentlichen frei ist von Schisandrabeerenkernen.

8. Zusammensetzung nach Anspruch 7, **dadurch gekennzeichnet, daß** sie zusätzlich einen Magnoliablütenextrakt umfaßt.

9. Zusammensetzung nach Anspruch 7 oder 8, **dadurch gekennzeichnet, daß** sie zusätzlich noch eine oder mehrere weitere Komponenten umfasst, wie etwa weitere Pflanzen und/oder derne Bestandteile und/oder deren Extrakte.

10. Zusammensetzung nach einem der Ansprüche 7 bis 9, in Form eines Fluidextraktgemischs, umfassend
etwa 20 - 90 % Wolfsbeerenextrakt,
etwa 5 - 50 % Schisandrabeerenextrakt, und gegebenenfalls
etwa 0,01 - 20 % Magnoliablütenextrakt und/oder mindestens einen weiteren Pflanzenextrakt.

11. Zusammensetzung nach Anspruch 10, in Form eines Konzentrats des Fluidextraktgemischs.

12. Zusammensetzung nach Anspruch 11, umfassend pro 100 g nativ:
etwa 20 bis 90 g Wolfsbeerenextrakt,
etwa 5 bis 70 g Schisandrabeerenextrakt, und gegebenenfalls
etwa 10mg bis 20 g Magnoliablütenextrakt und/oder mindestens einen weiteren Pflanzenextrakt.

13. Zusammensetzung nach einem der Ansprüche 7 bis 12, **dadurch gekennzeichnet, daß** sie ein Gemisch aus konzentrierten getrockneten Extrakten umfaßt.

14. Zusammensetzung nach Anspruch 13, umfassend
etwa 5 - 90 Gew.-% getrockneter Wolfsbeerenextrakt (bezogen auf das Gesamtgewicht der Zusammensetzung),
etwa 10 - 40 Gew.-% getrockneter Schisandrabeerenextrakt (bezogen auf das Gesamtgewicht der Zusammensetzung), und gegebenenfalls
etwa 0,01 - 15 Gew.-% getrockneter Magnoliablütenextrakt (bezogen auf das Gesamtgewicht der Zusammensetzung),

15. Zusammensetzung nach einem der Ansprüche 7 bis 14, zusätzlich umfassend nahrungsmittelverträgliche Zusatz- und/oder Trägerstoffe.

16. Zusammensetzung nach einem der Ansprüche 7 bis 15, **dadurch gekennzeichnet, daß** sie keine pharmakologisch aktiven Stoffe enthält.

17. Nahrungsergänzungsmittel, umfassend eine Zusammensetzung nach einem der Ansprüche 7 bis 16, sowie nahrungsmittelverträgliche Geschmacks-, Träger- und/oder Zusatzstoffe.

18. Nahrungsergänzungsmittel nach Anspruch 17, in Form von Getränkegranulat, Brausetabletten, Instantgetränk oder Instanttee.

19. Nahrungsergänzungsmittel nach Anspruch 17 in Form von Süßigkeiten, insbesondere in Form von Gummi-Zubereitungen aus Gummi arabicum und/oder Gelatine,.

20. Nahrungsergänzungsmittel nach Anspruch 19 in Form von Bonbons.

21. Nahrungsergänzungsmittel nach Anspruch 17 in Form eines Getränks.

22. Nahrungsergänzungsmittel nach Anspruch 17 in Form eines alkoholischen Getränks.

23. Nahrungsergänzungsmittel nach Anspruch 17 in Form von Kapseln und/oder Tabletten,.

24. Kosmetische Zusammensetzung, umfassend eine Zusammensetzung nach einem der Ansprüche 7 bis 16, sowie kosmetisch verträgliche Hilfs-, Zusatz- und/oder Trägerstoffe.

## Claims

1. A method for producing an extract of schisandra berries comprising the following steps:
(a) providing unchopped schisandra berries;
(b) allowing the schisandra berries to swell in water at a temperature below 90 °C;
(c) extracting the schisandra berries in water at a temperature not exceeding 70 °C;
(d) concentrating the liquid until an extract having a water content of less than 50% by weight (based on the total weight of the extract) is obtained.

2. A method according to claim 1, wherein in step (b), swelling is performed at a temperature of 40 °C to 65 °C.

3. A method according to claim 1 or claim 2, wherein in step (c), extracting is performed at a temperature of 50 °C to 70 °C.

4. A method according to any one of the preceding claims, further comprising the step of:
(e) adding ethanol to the extract from step (d) and extracting with an ethanol content of 70 to 90% by volume, based on the total volume of the extract.

5. An extract of schisandra berries obtainable by means of a method according to any one of claims 1 to 4.

6. An extract of schisandra berries according to claim 5, **characterized in that** the extract contains lignans and/or schisandrins in a concentration of less than 0.1 % (based on the dry portion of the extract).

7. A composition comprising an extract of schisandra berries, which is obtained by a method according to any one of claims 1 to 4, in combination with an extract of wolfberries, the composition being essentially free of schisandra berry seeds.

8. A composition according to claim 7, **characterized in that** the composition additionally comprises a magnolia blossom extract.

9. A composition according to claim 7 or 8, **characterized in that** the composition additionally comprises one or more further components such as further plants and/or their components and/or their extracts.

10. A composition according to any one of claims 7 to 9 in the form of a fluid extract mixture comprising
approximately 20 - 90 % of wolfberry extract;
approximately 5 - 50 % of schisandra berry extract; and optionally
approximately 0.01 - 20 % of magnolia blossom extract and/or at least one additional plant extract.

11. A composition according to claim 10 in the form of a concentrate of the fluid extract mixture.

12. A composition according to claim 11 comprising per 100 g native:
approximately 20 - 90 g of wolfberry extract;
approximately 5 - 70 g of schisandra berry extract; and optionally
approximately 10 mg - 20 g of magnolia blossom extract and/or at least one additional plant extract.

13. A composition according to any one of claims 7 to 12, **characterized in that** the composition comprises a mixture of concentrated dried extracts.

14. A composition according to claim 13 comprising
approximately 5 - 90% by weight of dried wolfberry extract (based on the total weight of the composition);
approximately 10 - 40% by weight of dried schisandra berry extract (based on the total weight of the composition); and optionally
approximately 0.01 - 15% by weight of dried magnolia blossom extract (based on the total weight of the composition).

15. A composition according to any one of claims 7 to 14 further comprising food-compatible additives and/or carrier substances.

16. A composition according to any one of claims 7 to 15, **characterized in that** the composition does not contain any pharmacologically active substances.

17. A dietary supplement comprising a composition according to any one of claims 7 to 16 and food-compatible flavoring agents, carrier substances and/or additives.

18. A dietary supplement according to claim 17 in the form of beverage granules, effervescent tablets, an instant beverage, or instant tea.

19. A dietary supplement according to claim 17 in the form of sweets, in particular in the form of gummi formulations made of gum arabic and/or gelatin.

20. A dietary supplement according to claim 19 in the form of hard candy.

21. A dietary supplement according to claim 17 in the form of a beverage.

22. A dietary supplement according to claim 17 in the form of an alcoholic beverage.

23. A dietary supplement according to claim 17 in the form of capsules and/or tablets.

24. A cosmetic composition comprising a composition according to any one of claims 7 to 16 and cosmetically acceptable auxiliary agents, additives and/or carrier substances.

## Revendications

1. Procédé de préparation d'un extrait de baies de schisandra,
comprenant les étapes :
(a) mise à disposition de baies de schisandra entières,
(b) gonflage des baies de schisandra dans de l'eau à une température inférieure à 90 °C,
(c) extraction des baies de schisandra dans de l'eau à une température inférieure ou égale à 70 °C,
(d) élimination du liquide jusqu'à obtention d'un extrait présentant une teneur en eau inférieure à 50 % en poids (par rapport au poids total de l'extrait).

2. Procédé selon la revendication 1, le gonflage à l'étape (b) étant réalisé à une température comprise entre 40 °C et 65 °C.

3. Procédé selon les revendications 1 ou 2, l'extraction à l'étape (c) étant réalisée à une température comprise entre 50 °C et 70 °C.

4. Procédé selon l'une des revendications précédentes, comprenant, en outre, l'étape :
e) ajout d'éthanol à l'extrait issu de l'étape d) et extraction à une teneur en éthanol comprise entre 70 et 90 % en volume, par rapport au volume total de l'extrait.

5. Extrait de baies de schisandra, pouvant être obtenu par un procédé selon l'une des revendications 1 à 4.

6. Extrait de baies de schisandra selon la revendication 5, **caractérisé en ce qu'**il contient des liganes et/ou schisandrines dans une concentration inférieure à 0,1 % (par rapport à la masse sèche de l'extrait).

7. Composition comprenant un extrait de baies de schisandra pouvant être obtenu par un procédé selon l'une des revendications 1 à 4, en combinaison avec un extrait de baies de goji, la composition étant essentiellement exempte de graines de baies de schisandra.

8. Composition selon la revendication 7, **caractérisée en ce qu'**elle comprend, en outre, un extrait de fleurs de magnolia.

9. Composition selon les revendications 7 ou 8, **caractérisée en ce qu'**elle comprend, en outre, un ou plusieurs autres composants tels que d'autres plantes et/ou leurs constituants et/ou leurs extraits.

10. Composition selon l'une des revendications 7 à 9, sous forme d'un fluide d'extraits mélangés comprenant
environ 20 à 90 % d'extrait de baies de goji,
environ 5 à 50 % d'extrait de baies de schisandra et, le cas échéant,
environ 0,01 à 20 % d'extrait de fleurs de magnolia et/ou au moins un autre extrait végétal.

11. Composition selon la revendication 10, sous forme d'un concentré dudit fluide d'extraits mélangés.

12. Composition selon la revendication 11, comprenant par 100 g de produit n'ayant pas subi de traitement ultérieur :
environ 20 à 90 g d'extrait de baies de goji,
environ 5 à 70 g d'extrait de baies de schisandra et, le cas échéant,
environ 10 mg à 20 g d'extrait de fleurs de magnolia et/ou au moins un autre extrait végétal.

13. Composition selon l'une des revendications 7 à 12, **caractérisée en ce qu'**elle comprend un mélange d'extraits secs concentrés.

14. Composition selon la revendication 13, comprenant :
environ 5 à 90 % en poids d'extrait sec de baies de goji (par rapport au poids total de la composition),
environ 10 à 40 % en poids d'extrait sec de baies de schisandra (par rapport au poids total de la composition) et, le cas échéant,
environ 0,01 à 15 % en poids d'extrait sec de fleurs de magnolia (par rapport au poids total de la composition).

15. Composition selon l'une des revendications 7 à 14, comprenant, en outre, des additifs et/ou supports convenant pour un usage alimentaire.

16. Composition selon l'une des revendications 7 à 15, **caractérisée en ce qu'**elle ne comprend pas de substances pharmacologiquement actives.

17. Complément alimentaire comprenant une composition selon l'une des revendications 7 à 16 ainsi que des arômes, des supports et/ou des additifs convenant pour un usage alimentaire.

18. Complément alimentaire selon la revendication 17, sous forme de granulés pour boissons, de comprimés effervescents, de boisson instantanée ou de thé instantané.

19. Complément alimentaire selon la revendication 17, sous forme de sucreries, notamment sous forme de préparation en gomme réalisées à partir de gomme arabique et/ou de gélatine.

20. Complément alimentaire selon la revendication 19, sous forme de bonbons.

21. Complément alimentaire selon la revendication 17, sous forme d'une boisson.

22. Complément alimentaire selon la revendication 17, sous forme d'une boisson alcoolisée.

23. Complément alimentaire selon la revendication 17, sous forme de capsules et/ou de comprimés.

24. Composition cosmétique, comprenant une composition selon l'une des revendications 7 à 16 ainsi que des agents auxiliaires, des additifs et/ou des supports convenant pour un usage cosmétique.
